# EUROPEAN PATENT APPLICATION

(11) **EP 4 589 437 A1**
(43) Date of publication of application: **23.07.2025**
(21) Application number: 24020029.5
(22) Date of filing: 19.01.2024
(51) Int. Cl.: G06F 11/07, G06F 3/06, G06F 11/30, G06F 11/36, G06F 11/34

(54) **SYSTEM AND METHOD FOR MONITORING NON-VOLATILE MEMORY WRITE OPERATIONS**

(71) Applicant: Giesecke+Devrient Mobile Security Germany GmbH, 81677 München (DE)
(72) Inventor: Hukeri, Manoj Vyankatesh, 411004 Pune (IN); Vinchhi, Tapan, 411004 Erandwane, Pune (IN); Kulkarni, Shreeyash, 411004 Erandwane, Pune (IN)
(74) Representative: Giesecke+Devrient IP

(57) **Abstract**

The present disclosure relates to a system (106) for detecting non-volatile memory (NVM) operations. The system (106) generates one or more events and determines a data parameter at run time associated with an NVM write operation performed by said at least one applet among the one or more applets (110). The data parameter comprises an accumulated NVM write operation performed by the one or more applets (110) during the event at run time. The system (106) compares the data parameter with a predetermined value and determines if the data parameter exceeds the predetermined value. In response to a positive determination, the system (106) records the data parameter in the NVM. The system (106) replaces the predetermined value with the data parameter, if the data parameter exceeds a total number of NVM write operations performed by the one or more applets during a preceding run time.

## Description

### TECHNICAL FIELD

The present disclosure relates generally to the field of wear level management on a non-volatile memory (NVM). In particular, the present disclosure relates to a system and method for monitoring NVM write operations.

### BACKGROUND

Background description includes information that may be useful in understanding the present invention. It is not an admission that any of the information provided herein is prior art or relevant to the presently claimed invention, or that any publication specifically or implicitly referenced is prior art.

Non-volatile memory (NVM) technology offers more scalability and durability than regular volatile memory. However, NVM suffers from limited write endurance, as the NVM will wear out very soon after a certain number of writes. Various wear reduction and leveling mechanisms have been proposed. However, most of these mechanisms are inefficient in solving the wear issue with the NVM.

Patent document US2008082447A1 discloses a portable mass storage with firmware that includes security mechanisms that limit access to read-write operations to ensure reliable operation and prevent unwanted copying or storing of secure content. The firmware is operable to work with a virtual machine and allows the virtual machine to access the secure content and work in conjunction with the firmware to read and write data to the mass storage memory. The virtual machine is either loaded but not activated at the time of manufacture, or is downloaded and activated post-manufacture. Any royalty for the virtual machine is paid for only if and when the virtual machine is both present and activated in the device.

Patent document WO2017028872A1 discloses a cloud-based method and system provisioning dynamic relocation of data for monitoring, leveling as well as warning of deleterious wear resulting from ongoing NVM updates. The cloud-based system and method are enabled during subscription management of mobile equipment, such as mobile phones, smartphones or machine-to-machine (M2M) devices, hosting embedded universal integrated circuit card/s (eUICC). The system selects the mobile equipment for hosting eUICC, and provides a first client program within the eUICC for consolidating the status of NVM resources on the eUICC. Further, the system receives the data consolidated by the first client program over the air at a cloud-based service for defining among the available NVM resources and provides updating. The system remotely organizes the execution of intended NVM updates on appropriate NVM resources defined by the cloud-based service.

Patent document EP2797003A1 discloses a method for flash memory management of a secure element. The method includes an applet in a secure element and utilization of the applet for managing access to the flash memory in order to organize erase and write cycles to the flash memory.

Patent document EP2270525A1 discloses a method of auditing the wear of an NVM embedded in a secure electronic token. The NVM comprises a basic unit where a token is associated with a mission profile that is intended to reflect the use of the NVM for a preset duration. The token comprises a first counter which is updated each time data is written or erased in the basic unit. The token is intended to execute applicative commands and comprises a second counter. The method comprises the step of updating the second counter each time an applicative command belonging to a preset set is executed. The method comprises the step of sending the two counters to a distant machine. The method comprises the step of comparing the two counters to the mission profile.

Although the above-mentioned prior arts disclose mechanisms for managing wear levels associated with the NVM, there is a requirement in the art for a means to overcome the above drawbacks, shortcomings, and limitations associated with existing mechanisms, and provide an improved system for monitoring and detecting excessive NVM write operations by applets and limit wear levels on the NVM.

### OBJECTS OF THE PRESENT DISCLOSURE

Some of the objects of the present disclosure, which at least one embodiment herein satisfy are as listed hereinbelow.

It is an object of the present disclosure to overcome the above drawbacks, shortcomings, and limitations associated with existing mechanisms and provide an improved system for detecting excessive NVM write operations by applets and limiting wear levels on the NVM.

It is an object of the present disclosure to provide a system and method for detecting excess NVM write operations by applets for a particular event at run time.

It is an object of the present disclosure to provide a system that monitors the NVM write operation by applets for the particular event at run time.

It is an object of the present disclosure to provide a system that monitors and detects excess NVM write operations by an applet for the particular event at run time.

### SUMMARY

The present disclosure relates to an improved system for implementing a measurement mechanism associated with smartcards for protecting its memory from malicious applets.

An aspect of the present disclosure pertains to a system for monitoring non-volatile memory (NVM) write operations. The system comprises a processor configured with an integrated circuit card and a memory configured with a plurality of instructions, which when executed by the processor, cause the processor to generate one or more events for a received application protocol data unit (APDU). One or more applets are configured to process one or more events. The processor triggers at least an applet among the one or more applets for processing the one or more events. The processor determines a data parameter at run time associated with an NVM write operation performed by said at least an applet among the one or more applets during an event. The data parameter comprises an accumulated NVM write operation performed by the one or more applets during the event at run time. The processor compares the data parameter with a predetermined value configured in the processor and determines if the data parameter exceeds the predetermined value. The processor, in response to a positive determination, records the data parameter in the NVM of the processor. The processor replaces the predetermined value with the data parameter, if the data parameter exceeds a total number of NVM write operations performed by the one or more applets during a preceding run time and detects an excess NVM write operation.

In an embodiment, the processor may be configured to record the data parameter associated with the NVM write operation and the accumulated NVM write operation in a data structure configured in the NVM, and a number of times the NVM write operation value has exceeded the predetermined value for said AID associated with the event

In an embodiment, the data structure may comprise at least one of an applet identification (AID) associated with the event, a maximum number of NVM writes performed, a delta value associated with the predetermined value, one or more flags, an AID configuration exceeding the predetermined value during the event, and a number of times the NVM write operation value has exceeded the predetermined value for said AID associated with the event

In an embodiment, the processor may be configured to determine the predetermined value based on a preconfigured NVM write value allowed by the processor for said at least applet among the one or more applets during the event at run time. The processor may be configured to determine the predetermined value based on a preconfigured accumulated NVM write value allowed by the processor for the one or more applets during the event at run time.

In an embodiment, the processor may be configured to record a count associated with a preceding NVM write operation performed by an applet during the preceding run time. The processor may be configured to determine if the count associated with the NVM write operation performed by the applet during the preceding run time is exceeded by the NVM write operation performed by said applet at run time. The processor may be configured to increment the count with a new count. The new count may comprise the NVM write operation performed by said applet during the event at run time. The processor may be configured to modify an entry in the NVM associated with the NVM write operation based on the new count.

In an embodiment, the preconfigured accumulated NVM write value may comprise a fixed part and a variable part. The fixed part may be based on the preconfigured NVM write value for the one or more applets and the preconfigured accumulated NVM write value for the one or more applets. The variable part may be based on one or more additional NVM writes allowed by the processor, during the event.

An aspect of the present disclosure pertains to a method for monitoring NVM write operations. The method comprises generating, by a processor, associated with a system, one or more events for a received APDU. The one or more applets are configured to process the one or more events. The method comprises monitoring, by the processor, at least an applet among the one or more applets for processing the one or more events. The method comprises determining, by the processor, a data parameter at run time associated with an NVM write operation performed by said at least an applet among the one or more applets during an event. The data parameter also comprises an accumulated NVM write operation performed by the one or more applets during the event at run time. The method comprises comparing, by the processor, the data parameter with a predetermined value configured in the processor and determining if the data parameter exceeds the predetermined value. The method comprises in response to a positive determination, recording, by the processor, the data parameter value in the NVM of the processor. The method comprises replacing, by the processor, the predetermined value with the data parameter, if the data parameter exceeds a total number of NVM write operations performed by the one or more applets during a preceding run time and correspondingly detecting an excess NVM write operation.

In an embodiment, the method may comprise recording, by the processor, the data parameter associated with the NVM write operation and the accumulated NVM write operation in a data structure configured in the NVM.

In an embodiment, the processor may be configured to determine the predetermined value based on a preconfigured NVM write value allowed by the processor for said t applet among the one or more applets during the event at run time. The processor may be configured to determine the predetermined value based on a preconfigured accumulated NVM write value allowed by the processor for the one or more applets during the event at run time.

In an embodiment, the processor may be configured to record a count associated with a preceding NVM write operation performed by an applet during the preceding run time. The processor may be configured to determine if the count associated with the NVM write operation performed by said applet during the preceding run time is exceeded by the NVM write operation performed by said applet at run time. The processor may be configured to increment the count with a new count. The new count may comprise the NVM write operation performed by said applet during the event at run time. The processor may be configured to modify an entry in the NVM associated with the NVM write operation based on the new count.

Various objects, features, aspects, and advantages of the present disclosure will become more apparent from the following detailed description of preferred embodiments, along with the accompanying drawing figures in which like numerals represent like features.

Within the scope of this application, it is expressly envisaged that the various aspects, embodiments, examples and alternatives set out in the preceding paragraphs, in the claims and/or in the following description and drawings, and in particular the individual features thereof, may be taken independently or in any combination. Features described in connection with one embodiment are applicable to all embodiments, unless such features are incompatible

### BRIEF DESCRIPTION OF DRAWINGS

The accompanying drawings are included to provide a further understanding of the present invention and are incorporated in and constitute a part of this specification. The drawings illustrate exemplary embodiments of the present invention and, together with the description,
FIG. 1 illustrates an exemplary network architecture 100 of the non-volatile memory (NVM) monitoring system, in accordance with an embodiment of the present disclosure.
FIG. 2 illustrates an exemplary processor diagram 200 of the NVM monitoring system of FIG. 1, in accordance with an embodiment of the present disclosure.
FIG. 3 illustrates an exemplary flow diagram 300 of the NVM monitoring by the system of FIG. 1, in accordance with an embodiment of the present disclosure.
FIG. 4 illustrates an exemplary flow diagram 400 of the proposed method for monitoring the NVM write operations, in accordance with an embodiment of the present disclosure.

### DETAILED DESCRIPTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the present disclosure as defined by the appended claims.

In the following description, numerous specific details are set forth in order to provide a thorough understanding of embodiments of the present invention. It will be apparent to one skilled in the art that embodiments of the present invention may be practiced without some of these specific details.

Embodiments of the present invention include various steps, which will be described below. The steps may be performed by hardware components or may be embodied in machine-executable instructions, which may be used to cause a general-purpose or special-purpose processor programmed with the instructions to perform the steps. Alternatively, steps may be performed by a combination of hardware, software, and firmware and/or by human operators.

The present disclosure describes a system and method for monitoring and detecting excessive non-volatile memory (NVM) write operations by applets for a particular event on a smartcard. Further, the system and method monitor and detect excess NVM writes by a particular applet for a particular event on the smartcard. The system monitors the excessive NVM write operations by applets at run time and records the NVM write operations by the applets.

The present disclosure overcomes the above drawbacks, shortcomings, and limitations associated with existing mechanisms, and provides an improved system and method for monitoring and detecting excess NVM write operations by applets and limits wear levels on the NVM.

In an aspect, the present disclosure relates to a system for monitoring NVM write operations. The system can include a processor configured with an integrated circuit card. The processor can include a memory configured with a plurality of instructions, which when executed by the processor, cause the processor to generate one or more events from a received application protocol data unit (APDU). The one or more applets may be configured to process the one or more events. The processor can trigger at least an applet among the one or more applets configured for processing the one or more events. The processor can determine a data parameter at run time associated with an NVM write operation performed by said at least an applet among the one or more applets during an event. The data parameter can include an accumulated NVM write operation performed by the one or more applets during the event at run time. The processor can compare the data parameter with a predetermined value configured in the processor and determine if the data parameter exceeds the predetermined value. The processor can, in response to a positive determination, record the data parameter in the NVM of the processor. The processor can replace the predetermined value with the data parameter, if the data parameter exceeds a total number of NVM write operations performed by one or more previous applets during a preceding run time and correspondingly detects an excess NVM write operation.

In an embodiment, the processor can be configured to record the data parameter associated with the NVM write operation and the accumulated NVM write operation in a data structure configured in the NVM.

In an embodiment, the data structure can include at least one of an applet identification (AID) associated with the event, a maximum number of NVM writes performed, a delta value associated with the predetermined value, one or more flags, an AID configuration exceeding the predetermined value during the event, and a number of times the NVM write operation value has exceeded the predetermined value for said AID associated with the event

In an embodiment, the processor can be configured to determine the predetermined value based on a preconfigured NVM write value allowed by the processor for said at least applet among the one or more applets during the event at run time. The processor can be configured to determine the predetermined value based on a preconfigured accumulated NVM write value allowed by the processor for the one or more applets during the event at run time.

In an embodiment, the processor can be configured to record a count associated with a preceding NVM write operation performed by an applet during the preceding run time. The processor can be configured to determine if the count associated with the NVM write operation performed by the applet during the preceding run time is exceeded by the NVM write operation performed by said applet at run time. The processor can be configured to increment the count with a new count. The new count can include the NVM write operation performed by said applet during the event at run time. The processor can be configured to modify an entry in the NVM associated with the NVM write operation based on the new count.

In an embodiment, the preconfigured accumulated NVM write value can include a fixed part and a variable part. The fixed part can be based on the preconfigured NVM write value for the one or more applets and the preconfigured accumulated NVM write value for the one or more applets. The variable part can be based on one or more additional NVM writes allowed by the processor, during the event.

In an aspect, the present disclosure relates to a method for monitoring NVM write operations. The method can include generating, by a processor, associated with a system, one or more events for a received APDU. The one or more applets can be configured to process the one or more events. The method can include triggering, by the processor, at least an applet among the one or more applets configured for processing the one or more events. The method can include determining, by the processor, a data parameter at run time associated with an NVM write operation performed by said at least an applet among the one or more applets during an event. The data parameter can include an accumulated NVM write operation performed by the one or more applets during the event at run time. The method can include comparing, by the processor, the data parameter with a predetermined value configured in the processor and determining if the data parameter exceeds the predetermined value. The method can include, in response to a positive determination, recording, by the processor, the data parameter value in the NVM of the processor. The method can include replacing, by the processor, the predetermined value with the data parameter, if the data parameter exceeds a total number of NVM write operations performed by the one or more applets during a preceding run time and correspondingly detecting an excess NVM write operation.

In an embodiment, the method can include recording, by the processor, the data parameter associated with the NVM write operation and the accumulated NVM write operation in a data structure configured in the NVM.

In an embodiment, the processor can be configured to determine the predetermined value based on a preconfigured NVM write value allowed by the processor for said applet among the one or more applets during the event at run time. The processor can be configured to determine the predetermined value based on a preconfigured accumulated NVM write value allowed by the processor for the one or more applets during the event at run time.

In an embodiment, the processor can be configured to record a count associated with a preceding NVM write operation performed by an applet during the preceding run time. The processor can be configured to determine if the count associated with the NVM write operation performed by the applet during the preceding run time is exceeded by the NVM write operation performed by the said applet at run time. The processor can be configured to increment the count with a new count. The new count can include the NVM write operation performed by said applet during the event at run time. The processor can be configured to modify an entry in the RAM and the NVM associated with the NVM write operation based on the new count.

Thus, the present disclosure provides an improved system and method for monitoring and detecting excessive NVM write operations by applets and limits wear levels on the NVM.

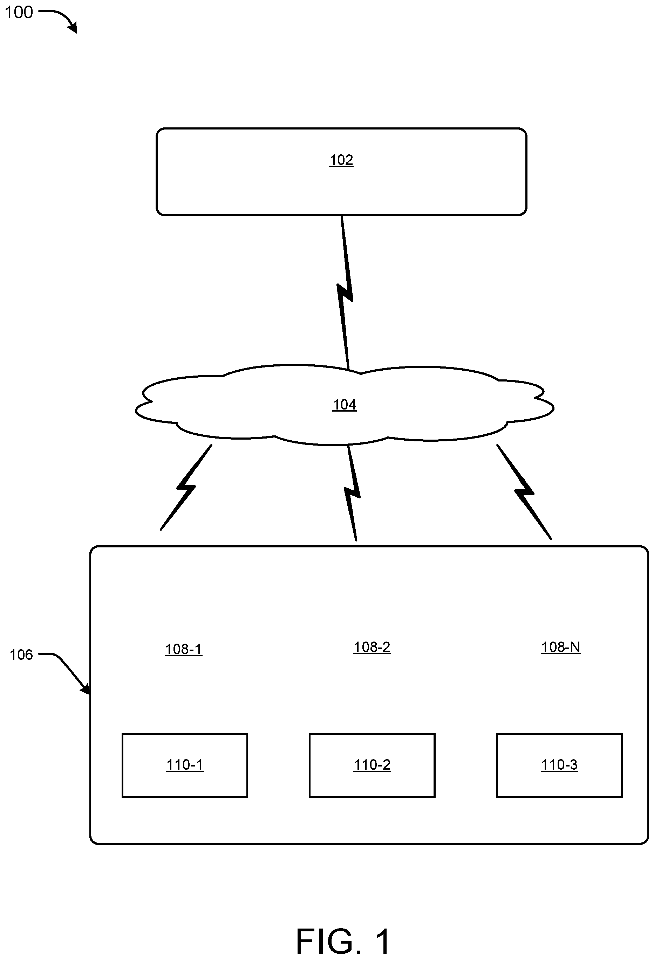

Referring to FIG. 1, the network architecture 100 may include a non-volatile monitoring system 106. Further, the non-volatile monitoring system 106 may be interchangeably mentioned as system 106 throughout the disclosure for the sake of brevity. The system 106 may be connected to a server 102 via a network 104. The system 106 may be incorporated with or may be associated with one or more integrated circuit cards (108-1, 108-2...108-N). The one or more integrated circuit cards (108-1, 108-2... 108-N) may be collectively referred to as 108. One or more applets (110-1, 110-2... 110-N) may be downloaded from the server 102 on the one or more integrated circuit cards 108 for performing one or more functions. The one or more applets 110 may be interchangeably mentioned as the one or more applets 110 for the sake of brevity.

In an embodiment, the system may include an application protocol data unit (APDU) that may include a command response protocol for invoking functions executed on the integrated circuit cards 108 or smart cards or similar devices. The command may include a 4-byte header with no data or a 5-byte header up to 255 bytes of data. The response may include a 2 byte header followed by up to 256 bytes of data. The APDU may be connected to the server 102 to provide one or more events, where the applets 110 may be configured to process the provided events.

In an embodiment, the network 104 may include, by way of example but not limitation, at least a portion of one or more networks having one or more nodes that transmit, receive, forward, generate, buffer, store, route, switch, process, or a combination thereof, etc. one or more messages, packets, signals, waves, voltage or current levels, some combination thereof, or so forth. The network 104 may also include, by way of example but not limitation, one or more of a wireless network, a wired network, an internet, an intranet, a public network, a private network, a packet-switched network, a circuit-switched network, an ad hoc network, an infra-data structure network, a Public-Switched Telephone Network (PSTN), a cable network, a cellular network, a satellite network, a fiber optic network, or some combination thereof.

In an embodiment, the system 106 may include a reference value of maximum NVM write operations. The system 106 for each of the one or more events, may support a total number of maximum NVM write operations by said least an applet among the one or more applets 110. Further, the system 106 may support the total number of maximum NVM write operations (accumulated NVM write operation) by the one or more applets 110 during the one or more events. The reference value may include a fixed part and a variable part. The fixed part may be based on the preconfigured/reference value NVM write value for the one or more applets and the preconfigured/reference accumulated NVM write value for the one or more applets. The variable part may be based on one or more additional NVM write operations allowed by the system 106 during the one or more events. However, additional write operations may be allowed by the system 106 that may include but not limited to garbage collection, and memory management.

In an embodiment, the fixed part may be referred to as X and may include a recording of the event among the one or more events by the system 106, a reference maximum NVM write value for the event may be configured with a tolerance for said at least applet among the one or more applets 110. Further, the system 106 may record a reference maximum NVM write value for the event with the tolerance associated with the one or more applets 110 during the event.

In an embodiment, the variable part may be referred to as Y and may include a type of operation and a reference maximum value for the operation with a tolerance.

In an embodiment, the system 106 may be configured to record the data parameter associated with the NVM write operation and the accumulated NVM write operation in a data structure/software data structure configured in the NVM. The data structure may include the applet identification (AID) associated with the event, a maximum number of NVM writes performed, a delta value associated with the predetermined value/reference value, one or more flags, an AID configuration exceeding the predetermined value during the event, and a number of times the NVM write operation value has exceeded the predetermined value for said AID associated with the event.

In an embodiment, the AID may include a unique AID-EVENT to be maintained for the applet among the one or more applets 110. Further, the AID may be 0000 when an entry is written for an event (sum of all NVM writes during handling of the event). For example, a measurement is performed for an event that includes multiple applets triggered during the processing of the event. The system 106 determines if the measurement crosses a reference NVM write value. Based on a positive determination, the system 108 records an entry associated with the event via the data structure. Additionally, 0000 is recorded in the place of AID in the data structure.

In an embodiment, the maximum number of NVM writes performed may be above the reference value. The entry may be updated every time a new high value is registered.

In an embodiment, the delta value associated with the predetermined value/reference value may include providing all information associated with the reference value.

In an embodiment, the one or more flags may include non-frequent operations such as defragmentation and garbage collection.

In an embodiment, the AID configuration exceeding the predetermined value during the event may include information about the number of times the reference value was crossed and generate an alert based on this information.

In an embodiment, the system 106 may store the data parameter in the NVM. Information may include details of the event, and an actual NVM write value performed by said at least applet among the one or more applets 110 during the event. Further, the information may include the actual NVM write value performed by the one or more applets 110 during the event.

In an embodiment, the system 106 may record a first entry when the actual number of NVM writes (by said at least applet) crosses the reference value for an unique AID-Event combination or the reference value for total NVM writes (by the one or more applets 110) for a particular event crosses the reference value. Further, the system 106 may modify the entry only if a current NVM write operation exceeds the number of NVM writes which were previously recorded by the system 106.

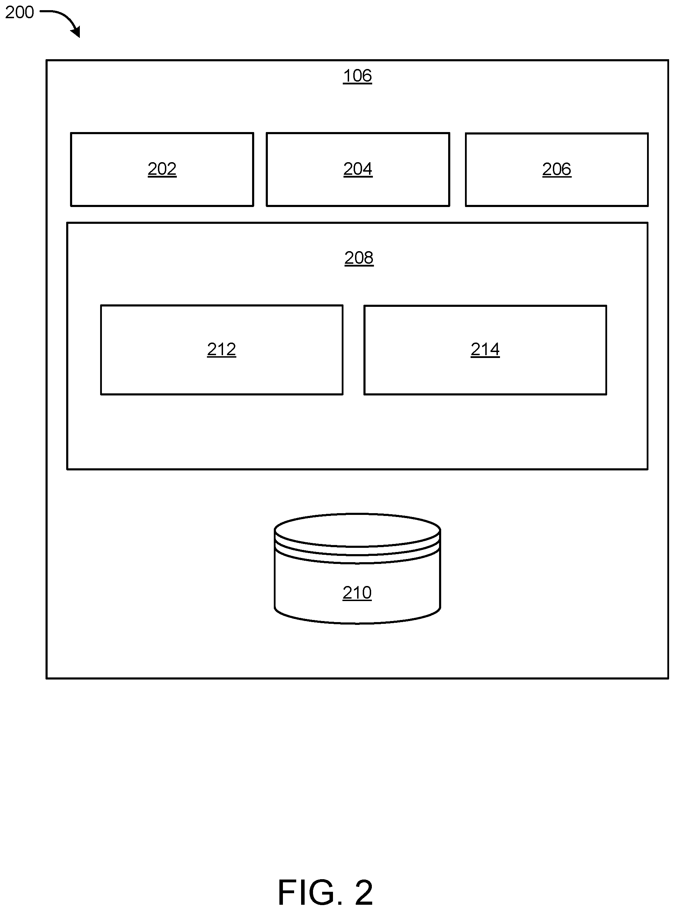

Referring to FIG. 2, in an embodiment, the system 106 may comprise one or more processor(s) 202 that may be implemented as one or more microprocessors, microcomputers, microcontrollers, digital signal processors, central processing units, logic circuitries, and/or any devices that process data based on operational instructions. Among other capabilities, the one or more processor(s) 202 may be configured to fetch and execute computer-readable instructions stored in a memory 204 of the system 106. The memory 204 may be configured to store one or more computer-readable instructions or routines in a non-transitory computer-readable storage medium, which may be fetched and executed to create or share data packets over a network service. The memory 204 may comprise any non-transitory storage device including, for example, volatile memory such as random-access memory (RAM), or non-volatile memory such as erasable programmable read only memory (EPROM), flash memory, and the like.

In an embodiment, the system 106 may include an interface(s) 206. The interface(s) 206 may comprise a variety of interfaces, for example, interfaces for data input and output (I/O) devices, storage devices, and the like. The interface(s) 206 may also provide a communication pathway for one or more components of the system 106. Examples of such components include, but are not limited to, processing engine(s) 208 and a database 210, where the processing engine(s) 208 may include, but not be limited to, a data ingestion engine 212 and other engine(s) 214. In an embodiment, the other engine(s) 214 may include, but is not limited to, a data management engine, an input/output engine, and a notification engine.

In an embodiment, the processing engine(s) 208 may be implemented as a combination of hardware and programming (for example, programmable instructions) to implement one or more functionalities of the processing engine(s) 208. In examples described herein, such combinations of hardware and programming may be implemented in several different ways. For example, the programming for the processing engine(s) 208 may be processor-executable instructions stored on a non-transitory machine-readable storage medium and the hardware for the processing engine(s) 208 may comprise a processing resource (for example, one or more processors), to execute such instructions. In the present examples, the machine-readable storage medium may store instructions that, when executed by the processing resource, implement the processing engine(s) 208. In such examples, the system 106 may comprise the machine-readable storage medium storing the instructions and the processing resource to execute the instructions, or the machine-readable storage medium may be separate but accessible to the system 106 and the processing resource. In other examples, the processing engine(s) 208 may be implemented by electronic circuitry.

In an embodiment, the processor 202 may generate one or more events for a received APDU via the data ingestion engine 212. The processor 202 may store the one or more events in the database 210. The one or more applets 110 may be configured to process the one or more events. The processor may trigger at least an applet among the one or more applets configured for processing the one or more events. The processor 202 may determine a data parameter at run time associated with an NVM write operation performed by said at least an applet among the one or more applets during an event. The data parameter may include an accumulated NVM write operation performed by the one or more applets during the event at run time. The processor 202 may compare the data parameter with a predetermined value configured in the processor and determine if the data parameter exceeds the predetermined value. The processor 202 in response to a positive determination, may record the data parameter in the NVM of the processor 202. The processor 202 may replace the predetermined value with the data parameter, if the data parameter exceeds a total number of NVM write operations performed by the one or more applets during a preceding run time and detect an excess NVM write operation.

In an embodiment, the processor 202 may be configured to record the data parameter associated with the NVM write operation and the accumulated NVM write operation in a data structure configured in the NVM.

In an embodiment, the data structure may include at least one of an AID associated with the event, a maximum number of NVM writes performed, a delta value associated with the predetermined value, one or more flags, an AID configuration exceeding the predetermined value during the event, and a number of times the NVM write operation value has exceeded the predetermined value for said AID associated with the event.

In an embodiment, the processor 202 may be configured to determine the predetermined value based on a preconfigured NVM write value allowed by the processor 202 for said at least one applet among the one or more applets during the event at run time. The processor 202 may be configured to determine the predetermined value based on a preconfigured accumulated NVM write value allowed by the processor 202 for the one or more applets during the event at run time.

In an embodiment, the processor 202 may be configured to record a count associated with a preceding NVM write operation performed by an applet during the preceding run time. The processor 202 may be configured to determine if the count associated with the NVM write operation performed by the applet during the preceding run time is exceeded by the NVM write operation performed by the said applet at run time. The processor 202 may be configured to increment the count with a new count. The new count can include the NVM write operation performed by said applet during the event at run time. The processor 202 may be configured to modify an entry in the NVM associated with the NVM write operation based on the new count.

In an embodiment, the preconfigured accumulated NVM write value can include a fixed part and a variable part. The fixed part may be based on the preconfigured NVM write value for the one or more applets and the preconfigured accumulated NVM write value for the one or more applets. The variable part may be based on one or more additional NVM writes allowed by the processor 202 during the event.

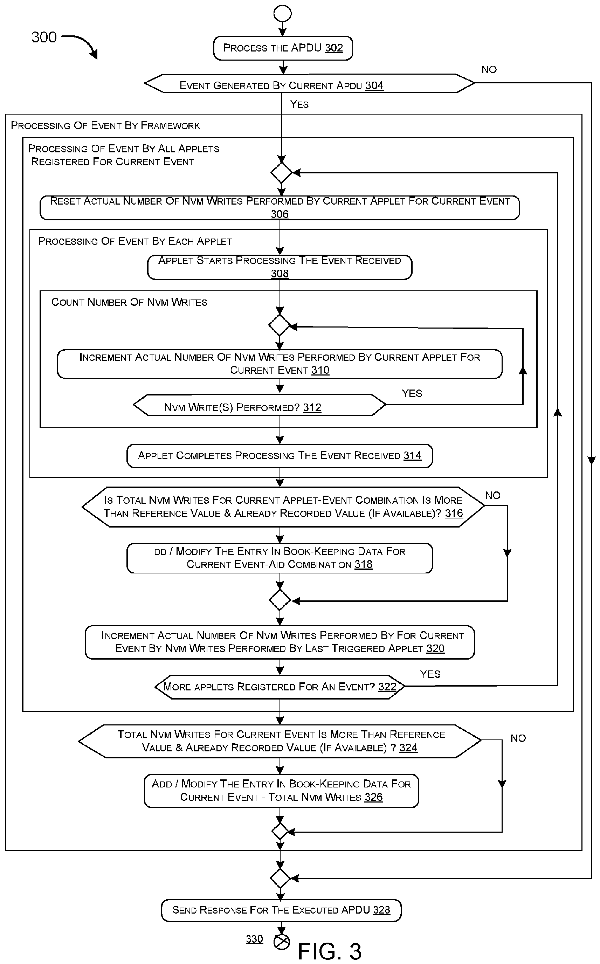

Referring to FIG. 3, in an embodiment, the flow diagram 300 may include the following steps.

At step 302: The system 106 may process the APDU.

At step 304: The system 106 may determine if the event is generated by the APDU. Based on a negative determination, the system 106 may go to step 332.

At step 306: Based on a positive determination, the system 106 may reset the actual number of NVM writes performed by the current applet for the current event.

At step 308: The applets may start processing the events received.

At step 310: The system 106 may increment the actual number of NVM writes performed by the current applet for the current event.

At step 312: The system 106 may determine if NVM writes are performed.

At step 314: Based on a positive determination, the system 106 may go to step 310. Based on a negative determination, the system 106 may complete the processing of the event.

At step 316: The system 106 may determine if the total number of NVM writes for applet-event combination is more than the reference value and already recorded.

At step 318: Based on a positive determination from step 316, the system 106 may add/modify entries in bookkeeping data for the current event-AID combination.

At step 320: Based on a negative determination from step 316, the system 106 may increment the actual number of NVM writes performed for the current event by NVM writes performed by last triggered applet.

At step 322: The system 106 may determine if more applets are registered for the event.

At step 324: Based on a positive determination from step 322, the system 106 may go to step 306. Based on a negative determination, the system 106 may determine if the total NVM writes for the current event is more than the reference value and already recorded value (if available).

At step 326: Based on a positive determination from step 322, the system 106 may add/modify the entry in bookkeeping data for current event (total NVM writes).

At step 328: Based on a negative determination from step 322, the system 106 may send response for the executed APDU.

At step 330: The system 106 may terminate the process.

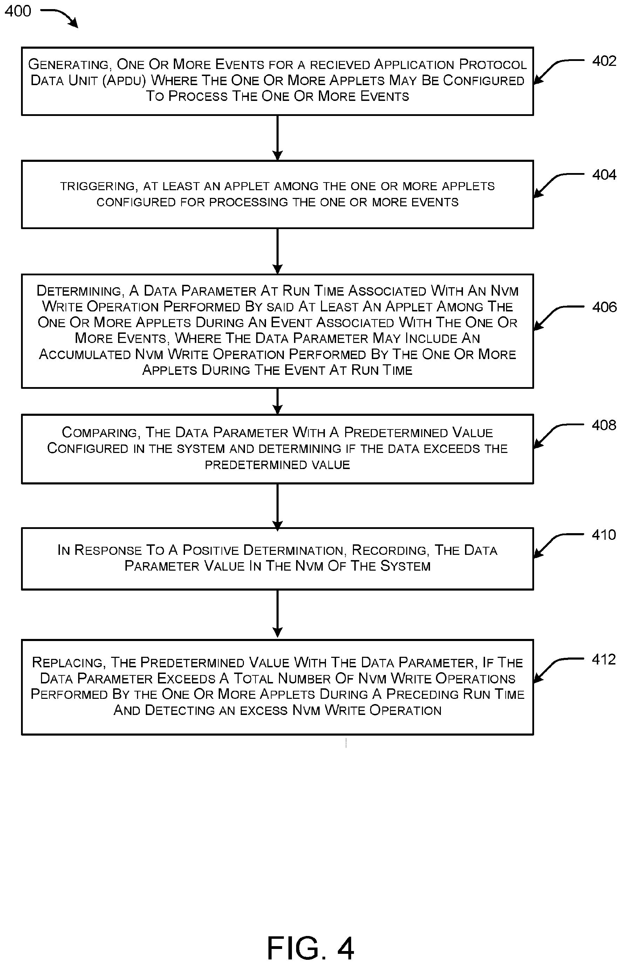

Referring to FIG. 4, in an embodiment, the method flow diagram may include the following steps.

At step 402: The system 106 may include generating, one or more events for a received application protocol data unit (APDU) where the one or more applets 110 may be configured to process the one or more events.

At step 404: The system 106 may include triggering, at least an applet among the one or more applets configured for processing the one or more events.

At step 406: The system 106 may include determining, a data parameter at run time associated with an NVM write operation performed by said at least an applet among the one or more applets during an event associated with the one or more events, where the data parameter may include an accumulated NVM write operation performed by the one or more applets during the event at run time.

At step 408: The system 106 may include comparing, the data parameter with a predetermined value configured in the system 106 and determining if the data parameter exceeds the predetermined value.

At step 410: The system 106 may include in response to a positive determination, recording, the data parameter value in the NVM of the system 106.

At step 412: The system 106 may include replacing, the predetermined value with the data parameter, if the data parameter exceeds a total number of NVM write operations performed by the one or more applets during a preceding run time and detecting an excess NVM write operation.

If the specification states a component or feature "may", "can", "could", or "might" be included or have a characteristic, that particular component or feature is not required to be included or have the characteristic.

As used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise.

Moreover, in interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced.

While the foregoing describes various embodiments of the invention, other and further embodiments of the invention may be devised without departing from the basic scope thereof. The scope of the invention is determined by the claims that follow. The invention is not limited to the described embodiments, versions or examples, which are comprised to enable a person having ordinary skill in the art to make and use the invention when combined with information and knowledge available to the person having ordinary skill in the art.

### ADVANTAGES OF THE INVENTION

The proposed invention overcomes the above drawbacks, shortcomings, and limitations associated with existing mechanisms, and provides an improved system and method for detecting excessive NVM write operations by applets and limiting wear levels on the NVM.

The proposed invention provides a system and method for detecting excess NVM write operations by applets for a particular event at run time.

The proposed invention provides a system that monitors the NVM write operation by applets for the particular event at run time.

The proposed invention provides a system that monitors and detects excess NVM write operations by an applet for the particular event at run time.

## Claims

1. A system (106) for monitoring non-volatile memory (NVM) write operations, the system comprising:
a processor (202) configured with an integrated circuit card 108; and
a memory (204) configured with a plurality of instructions, which when executed by the processor (202), cause the processor (202) to:
generate one or more events for a received application protocol data unit (APDU), wherein one or more applets are configured to process the one or more events;
trigger at least an applet among the one or more applets (110) configured for processing the one or more events;
determine a data parameter at run time associated with an NVM write operation performed by said at least an applet among the one or more applets (110) during an event, wherein the data parameter comprises an accumulated NVM write operation performed by the one or more applets (110) during the event at run time;
compare the data parameter with a predetermined value configured in the processor and determine if the data parameter exceeds the predetermined value;
in response to a positive determination, record the data parameter in the NVM of the processor (202); and
replace the predetermined value with the data parameter, if the data parameter exceeds a total number of NVM write operations performed by the one or more applets during a preceding run time and detect an excess NVM write operation.

2. The system (106) as claimed in claim 1, wherein the processor (202) is configured to record the data parameter associated with the NVM write operation and the accumulated NVM write operation in a data structure configured in the NVM.

3. The system (106) as claimed in claim 2, wherein the data structure comprises at least one of: an applet identification (AID) associated with the event, a maximum number of NVM writes performed, a delta value associated with the predetermined value, one or more flags, an AID configuration exceeding the predetermined value during the event, and a number of times the NVM write operation value has exceeded the predetermined value for said AID associated with the event.

4. The system (106) as claimed in claim 1, wherein the processor (202) is configured to:
determine the predetermined value based on a preconfigured NVM write value allowed by the processor (202) for said at least applet among the one or more applets (110) during the event at run time;
determine the predetermined value based on a preconfigured accumulated NVM write value allowed by the processor (202) for the one or more applets (110) during the event at run time.

5. The system (106) as claimed in claim 1, wherein the processor (202) is configured to:
record a count associated with a preceding NVM write operation performed by an applet during the preceding run time;
determine if the count associated with the NVM write operation performed by the applet during the preceding run time is exceeded by the NVM write operation performed by said applet at run time;
increment the count with a new count, wherein the new count comprises the NVM write operation performed by said applet during the event at run time; and
modify an entry in the NVM associated with the NVM write operation based on the new count.

6. The system (106) as claimed in claim 1, wherein the preconfigured accumulated NVM write value comprises a fixed part and a variable part, wherein the fixed part is based on the preconfigured NVM write value for the one or more applets and the preconfigured accumulated NVM write value for the one or more applets, and wherein the variable part is based on one or more additional NVM writes allowed by the processor (202), during the event.

7. A method (400) for monitoring non-volatile memory (NVM) write operations, the method comprising:
generating (402), by a processor (202), associated with a system (106) one or more events for a received application protocol data unit (APDU), wherein one or more applets are configured to process the one or more events;
triggering (404), by the processor (202), at least an applet among the one or more applets (110) configured for processing the one or more events;
determining (406), by the processor (202), a data parameter at run time associated with an NVM write operation performed by said at least an applet among the one or more applets (110) during an event, wherein the data parameter also comprises an accumulated NVM write operation performed by the one or more applets (110) during the event at run time;
comparing (408), by the processor (202), the data parameter with a predetermined value configured in the processor (202) and determining if the data parameter exceeds the predetermined value;
in response to a positive determination, recording (410), by the processor (202), the data parameter value in the NVM of the processor; and
replacing, by the processor (412), the predetermined value with the data parameter, if the data parameter exceeds a total number of NVM write operations performed by the one or more applets during a preceding run time and correspondingly detecting an excess NVM write operation.

8. The method (400) as claimed in claim 7, comprising recording, by the processor (202), the data parameter associated with the NVM write operation and the accumulated NVM write operation in a data structure configured in the NVM.

9. The method (400) as claimed in claim 7, wherein the processor (202) is configured to:
determine the predetermined value based on a preconfigured NVM write value allowed by the processor (202) for said applet among the one or more applets (110) during the event at run time; and
determine the predetermined value based on a preconfigured accumulated NVM write value allowed by the processor (202) for the one or more applets (110) during the event at run time.

10. The method (400) as claimed in claim 7, wherein the processor (202) is configured to:
record a count associated with a preceding NVM write operation performed by an applet during the preceding run time;
determine if the count associated with the NVM write operation performed by said applet during the preceding run time is exceeded by the NVM write operation performed by the said applet at run time;
increment the count with a new count, wherein the new count comprises the NVM write operation performed by said applet during the event at run time; and
modify an entry in the NVM associated with the NVM write operation based on the new count.

## Amended claims

### Amended claims in accordance with Rule 137(2) EPC.

1. A system (106) for monitoring non-volatile memory (NVM) write operations, the system comprising:
a processor (202) configured with an integrated circuit card 108; and
a memory (204) configured with a plurality of instructions, which when executed by the processor (202), cause the processor (202) to:
generate one or more events for a received application protocol data unit (APDU), wherein one or more applets are configured to process the one or more events;
trigger at least an applet among the one or more applets (110) configured for processing the one or more events;
determine a data parameter at run time associated with an NVM write operation performed by said at least an applet among the one or more applets (110) during an event, wherein the data parameter comprises an accumulated number of NVM write operations performed by the one or more applets (110) during the event at run time;
compare the data parameter with a predetermined value configured in the processor and determine if the data parameter exceeds the predetermined value;
in response to a positive determination, record the data parameter in the NVM of the processor (202); and
replace the predetermined value with the data parameter, if the data parameter exceeds a total number of NVM write operations performed by the one or more applets during a preceding run time and detect an excess NVM write operation.

2. The system (106) as claimed in claim 1, wherein the processor (202) is configured to record the data parameter associated with the NVM write operation and the accumulated number of NVM write operations in a data structure configured in the NVM.

3. The system (106) as claimed in claim 2, wherein the data structure comprises at least one of: an applet identification (AID) associated with the event, a maximum number of NVM writes performed, a delta value associated with the predetermined value, one or more flags, an AID configuration exceeding the predetermined value during the event, and a number of times the NVM write operation value has exceeded the predetermined value for said AID associated with the event.

4. The system (106) as claimed in claim 1, wherein the processor (202) is configured to:
determine the predetermined value based on a preconfigured NVM write value allowed by the processor (202) for said at least applet among the one or more applets (110) during the event at run time;
determine the predetermined value based on a preconfigured accumulated NVM write value allowed by the processor (202) for the one or more applets (110) during the event at run time.

5. The system (106) as claimed in claim 1, wherein the processor (202) is configured to:
record a count associated with a preceding NVM write operation performed by an applet during the preceding run time;
determine if the count associated with the NVM write operation performed by the applet during the preceding run time is exceeded by the NVM write operation performed by said applet at run time;
increment the count with a new count, wherein the new count comprises the NVM write operation performed by said applet during the event at run time; and
modify an entry in the NVM associated with the NVM write operation based on the new count.

6. The system (106) as claimed in claim 1, wherein the preconfigured accumulated NVM write value comprises a fixed part and a variable part, wherein the fixed part is based on the preconfigured NVM write value for the one or more applets and the preconfigured accumulated NVM write value for the one or more applets, and wherein the variable part is based on one or more additional NVM writes allowed by the processor (202), during the event.

7. A method (400) for monitoring non-volatile memory (NVM) write operations, the method comprising:
generating (402), by a processor (202), associated with a system (106) one or more events for a received application protocol data unit (APDU), wherein one or more applets are configured to process the one or more events;
triggering (404), by the processor (202), at least an applet among the one or more applets (110) configured for processing the one or more events;
determining (406), by the processor (202), a data parameter at run time associated with an NVM write operation performed by said at least an applet among the one or more applets (110) during an event, wherein the data parameter also comprises an accumulated number of NVM write operations performed by the one or more applets (110) during the event at run time;
comparing (408), by the processor (202), the data parameter with a predetermined value configured in the processor (202) and determining if the data parameter exceeds the predetermined value;
in response to a positive determination, recording (410), by the processor (202), the data parameter value in the NVM of the processor; and
replacing, by the processor (412), the predetermined value with the data parameter, if the data parameter exceeds a total number of NVM write operations performed by the one or more applets during a preceding run time and correspondingly detecting an excess NVM write operation.

8. The method (400) as claimed in claim 7, comprising recording, by the processor (202), the data parameter associated with the NVM write operation and the accumulated number of NVM write operations in a data structure configured in the NVM.

9. The method (400) as claimed in claim 7, wherein the processor (202) is configured to:
determine the predetermined value based on a preconfigured NVM write value allowed by the processor (202) for said applet among the one or more applets (110) during the event at run time; and
determine the predetermined value based on a preconfigured accumulated NVM write value allowed by the processor (202) for the one or more applets (110) during the event at run time.

10. The method (400) as claimed in claim 7, wherein the processor (202) is configured to:
record a count associated with a preceding NVM write operation performed by an applet during the preceding run time;
determine if the count associated with the NVM write operation performed by said applet during the preceding run time is exceeded by the NVM write operation performed by the said applet at run time;
increment the count with a new count, wherein the new count comprises the NVM write operation performed by said applet during the event at run time; and
modify an entry in the NVM associated with the NVM write operation based on the new count.
